# EUROPEAN PATENT SPECIFICATION

(11) **EP 1 302 926 B1**
(45) Date of publication and mention of the grant of the patent: **17.08.2005**
(21) Application number: 02021232.0
(22) Date of filing: 18.09.2002
(51) Int. Cl.: G09G 3/36, G09G 3/20

(54) **Apparatus and method for preventing lock-up of LCD in a mobile terminal**
Gerät und Verfahren zur Vermeidung von Blockaden eines LCDs in einem mobilen Endgerät
Dispositif et procédé pour empêcher le blocage d'un écran à cristaux liquides dans un terminal mobile

(30) Priority: 15.10.2001 KR 2001063350
(43) Date of publication of application: 16.04.2003
(73) Proprietor: LG ELECTRONICS INC., Seoul (KR)
(72) Inventor: Park, Jong-Boo, Seoul (KR)
(74) Representative: Urner, Peter, Dipl.-Phys.

(56) References cited:
- US-A- 5 012 314
- US-A- 5 936 687
- US-A- 5 999 392

## Description

### BACKGROUND OF THE INVENTION

### 1. Field of the Invention

The present invention relates to a mobile terminal, and more particularly, to an apparatus and method for preventing lock-up of an LCD in a mobile terminal.

### 2. Background of the Related Art

In general, a liquid crystal display (LCD) is a device that utilizes an optical switching phenomenon. Specifically, liquid crystal, an intermediate between a solid and a liquid, is injected between two thin glass plates and the arrangement of the liquid crystal molecules can be changed by creating a voltage difference between electrodes on the upper and lower glass plates. In this way, the liquid crystal molecules can be rearranged to manipulate the polarization of input light, which in turn can be used to provide light and dark areas on a pixel-by-pixel basis in order to display a number or an image.

Once used for watches or electronic computers in the 1970's, the LCD's scope of use has since been extended and is now a core display device used for advanced information devices and image displayers.

Because LCDs are thin, light and exhibit low power consumption, they are suitable for portable information terminals, such as notebook computers (laptop computers) and mobile phones. The relative importance of LCDs for mobile phone applications is rising, and thus larger and more complicated LCDs are being made.

However, as LCDs become larger and more complicated, they become more susceptible to electrostatic discharge (ESD). Thus, a method for operating the LCD in a normal manner when it is locked up by the ESD of the mobile terminal is needed.

An automatic reset circuit for detecting much faster transient voltage variation between a supply voltage and the electric ground of an electric system, like mobile phone, is described in the document US 5 999 392. The automatic reset circuit includes a plurality of detecting units, a plurality of voltage-couple devices connected with the detecting units, and a decision unit with an output port. The automatic reset circuit can detect nanosecond transient voltage variation between the supply voltage and the electric ground, wherein a reset is enabled for protecting the inner circuits and surviving the normal operations of the electric system.

Related art methods for preventing lock-up of an LCD of a mobile terminal include a hardware method, in which a transient voltage suppression (TVS) diode, for preventing static electricity from being introduced, is installed at lines connected to each input pin of the LCD of a mobile terminal. Another related art method is a software method, in which the LCD is periodically reset by software.

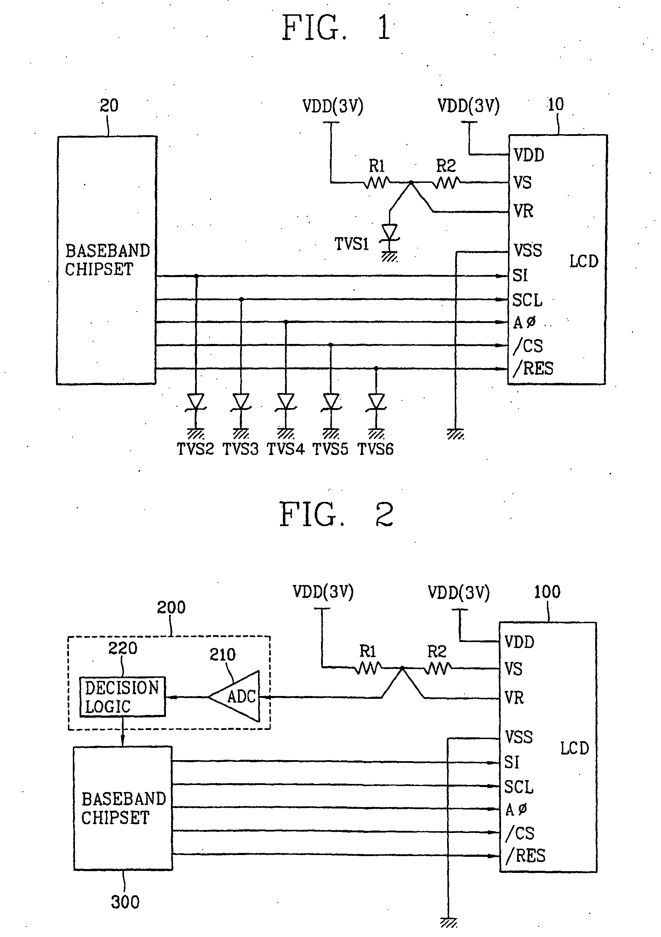

Figure 1 is a drawing illustrating an example of an apparatus for preventing lock-up of an LCD in a mobile phone, in accordance with the related art. As shown in Figure 1, the related art apparatus for preventing lock-up of an LCD in a mobile phone includes: an LCD 10 for displaying an image; a baseband chip set 20 for controlling a display operation of the LCD 10; and first through sixth TVS diodes (TVS1-TVS6) for limiting each voltage input to the LCD 10.

The first TVS diode TVS1 limits a voltage input so as to be boosted in the LCD 10 and a brightness control voltage. The second TVS diode TVS2 limits a level of a data input from the baseband chip set 20 to the LCD 10. The third TVS diode TVS3 limits a level of a clock input from the baseband chip set 20 to the LCD 10. The fourth TVS diode TVS4 limits a level of an address input from the baseband chip set 20 to the LCD 10. The fifth TVS diode TVS5 limits a level of a chip select signal input from the baseband chip set 20 to the LCD 10. The sixth TVS diode TVS6 limits a level of a reset signal input from the baseband chip set 20 to the LCD 10.

In this manner, the related art LCD lock-up preventing apparatus using TVS diodes in the mobile terminal limits the voltage input to each pin of the LCD 10, thereby preventing the LCD 10 from being locked up due to the ESD. However, the related art LCD lock-up preventing apparatus that utilizes TVS diodes in the mobile terminal has disadvantages in that, since a TVS diode needs to be provided for every line input to each pin of the LCD, the size of the LCD is increased, which makes this approach unsuitable for mobile terminals, which are typically compact in size.

The software method for periodically resetting the LCD in order to prevent lock-up of the LCD causes inconvenience for users, as the LCD is periodically reset and thus blinks periodically.

### SUMMARY OF THE INVENTION

An object of the invention is to solve at least the above problems and/or disadvantages and to provide at least the advantages described hereinafter.

An object of the present invention is to provide an apparatus and method for preventing lock-up of an LCD in a mobile terminal that is capable of detecting whether an ESD has been applied to an LCD by detecting a voltage on a predetermined pin of the LCD.

Another object of the present invention is to provide an apparatus and method for preventing lock-up of an LCD in a mobile terminal that are capable of preventing lock-up of an LCD due to an ESD by monitoring a voltage input to a pin that exhibits the greatest voltage level change, when an ESD is applied to the LCD, than all other individual pins of the LCD, checking whether the LCD is in a normal state based on the monitored voltage, and resetting the LCD if the LCD is not in a normal state.

To achieve at least the above objects, in whole or in part, there is provided an apparatus for preventing lock-up of a liquid crystal display (LCD), including an LCD, an electrostatic discharge (ESD) detecting unit for detecting whether an ESD has been applied to the LCD, and a baseband chip set for resetting the LCD according to a reset control signal output from the ESD detecting unit.

To achieve at least these advantages, in whole or in part, there is further provided an apparatus for preventing lock-up of an LCD, including an LCD, an analog-digital converter for converting an analog voltage input to a predetermined pin of the LCD into digital voltage, wherein, when ESD is applied to the LCD, the predetermined pin exhibits a voltage level change that is greater than a voltage level change exhibited by all other individual pins of the LCD, a decision logic for determining whether an ESD has been applied to the LCD, by checking whether the digital voltage is within a predetermined range in which the LCD is in a normal state, and a baseband chip set for resetting the LCD under the control of the decision logic.

To achieve at least these advantages in whole or in part, there is further provided a method for preventing lock-up of an LCD, including converting an analog voltage of a predetermined pin of the LCD into a digital voltage, checking whether an ESD has been applied to the LCD based on the digital voltage, and resetting the LCD if an ESD has been applied to the LCD.

To achieve at least these advantages, in whole or in part, there is further provided a method for preventing lock-up of an LCD, including monitoring a voltage on a pin of the LCD, determining if an ESD has been applied to the LCD based on the monitored voltage, and resetting the LCD if an ESD has been applied to the LCD.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figure 1 is a schematic diagram of an apparatus for preventing lock-up of an LCD in a mobile terminal, in accordance with the related art;
Figure 2 is a schematic diagram of an apparatus for preventing lock-up of an LCD in a mobile terminal, in accordance with one preferred embodiment of the present invention;
Figure 3A is a flowchart of control routine used by the ESD detecting unit of Figure 1, in accordance with one preferred embodiment of the present invention; and
Figure 3B is a flowchart of control routine used by the baseband chip set of Figure 1, in accordance with one preferred embodiment of the present invention.

### DETAILED DESCRIPTION OF PREFERRED EMBODIMENTS

Figure 2 is a schematic diagram of an apparatus for preventing lock-up of an LCD in a mobile terminal, in accordance with one preferred embodiment of the present invention.

As shown in Figure 2, an apparatus for preventing lock-up of an LCD in a mobile terminal includes: an LCD 100 for displaying an image; an ESD detecting unit 200 for detecting whether an ESD has been applied to the LCD 100 by sensing a voltage input to a specific pin of the LCD 100; and a baseband chip set 300 for resetting the LCD 100 according to a reset control signal output from the ESD detecting unit 200.

The ESD detecting unit 200 includes: an analog-digital converter 210 for converting an analog voltage input to a specific pin of the LCD 100 into a digital voltage; and a decision logic 220 for determining whether an ESD has been applied to the LCD 100, by checking whether the digital voltage output from the analog-digital converter 210 is within a predetermined range.

The specific pin of the LCD 100 which is monitored by the ESD detecting unit 200 is preferably a pin that exhibits the greatest voltage level change when ESD occurs, and the predetermined voltage range is preferably a voltage level range that the specific pin can have when the LCD 100 is in a normal state with no ESD applied thereto. However, the voltage at other pins of the LCD 100 can be monitored to determine whether ESD has been applied, while still falling within the scope of the present invention.

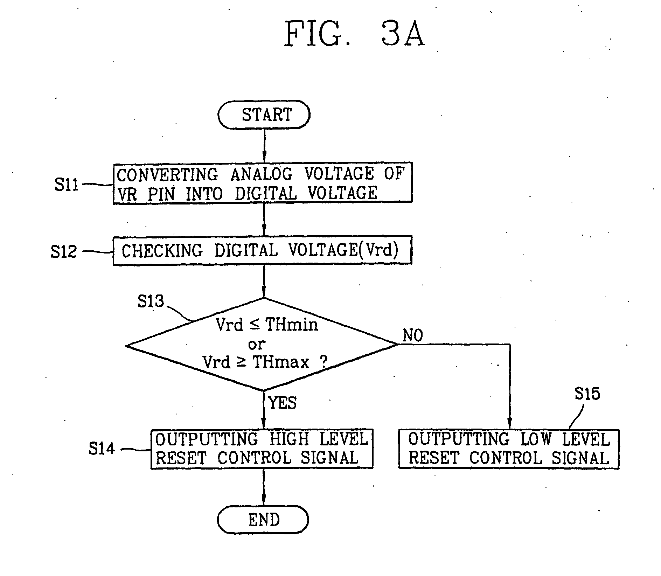

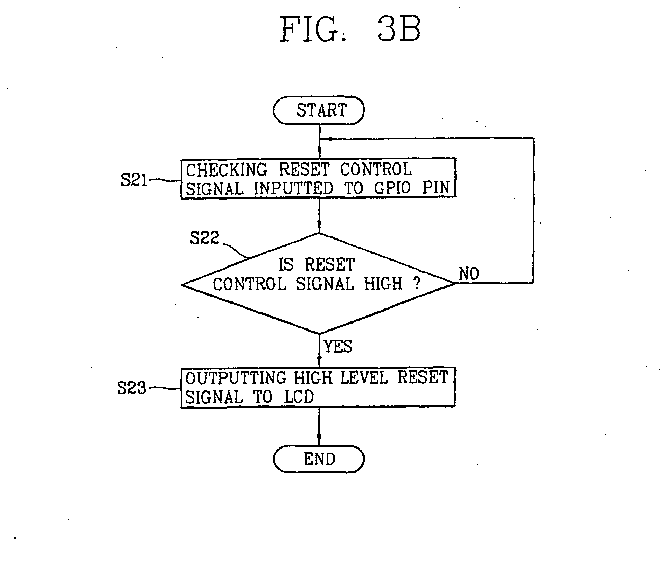

The operation of the apparatus for preventing lock-up of an LCD in a mobile terminal, constructed as described above in accordance with one preferred embodiment of the present invention, will now be explained with reference to Figures 3A and 3B.

Figure 3A is a flowchart of a control routine for the ESD detecting unit 200, in accordance with one preferred embodiment of the present invention, and Figure 3B is a flowchart of control routine for the baseband chip set 300, in accordance with one preferred embodiment of the present invention.

When an ESD is applied to the LCD 100 of the mobile terminal, the voltages at each pin of the LCD 100 are instantly changed. In the embodiment of Figure 2, the voltage at the VR pin (brightness control pin) exhibits the greatest voltage level change as a result of the ESD.

For example, if the voltage of the VR pin is maintained at about 0.9 V in a state in which no ESD has been applied thereto (i.e., in a normal state), when ESD is applied to the VR pin, the VR pin has a voltage level that falls below approximately 0.4 V or above approximately 1.5V.

The voltage on the VR pin is a voltage obtained by a voltage input to the VS pin (a boosting voltage pin) of the LCD 100, which is distributed by voltage distribution resistances (R1, R2), and the brightness of the LCD 100 is controlled by a voltage (brightness control voltage) input to the VR pin.

The analog-digital converter 210 converts the analog voltage on the VR pin, which exhibits the greatest voltage level change when ESD occurs, into a digital voltage (Vrd) at step S11. Next, at step S12, the decision logic 220 checks whether the digital voltage (Vrd) output from the analog-digital converter 201 is within the predetermined range determined to be a normal state in which no ESD has been applied to the LCD 100.

If the digital voltage (Vrd) is within the predetermined range, the decision logic 220 determines that the LCD 100 is in a normal state. However, if the digital voltage (Vrd) is not within the predetermined range, the decision logic 220 determines that ESD has been applied to the LCD 100.

For example, if the voltage on the VR pin is approximately 0.9 V in a state in which no ESD has been applied to the LCD 100, the decision logic 220 sets a minimum threshold value (Thmin) of 0.4 V and a maximum threshold value (Thmax) of 1.5V for determining whether ESD has been applied to the LCD 100.

At steps S13 and S15, if the digital voltage (Vrd) is greater than 0.4V and smaller than 1.5 V, the decision logic 220 determines that no ESD has been applied to the LCD and outputs a low level reset control signal to the baseband chip set 300.

However, if the digital voltage (Vrd) is not greater than 0.4 V and not smaller than 1.5 V, the decision logic 220 determines that ESD has been applied to the LCD 100, and outputs a high level reset control signal to the baseband chip set 300, as shown in step S14.

Referring to Figure 3B, the baseband chip set 300 checks a reset control signal input from the decision logic 220 through a global port for input/output (GPIO) at step S21. Then, at step S22, if the reset control signal is a low level reset control signal, the baseband chip set 300 determines that the LCD 100 is in a normal state. However, if the reset control signal is a high level reset control signal, the baseband chip set 300 determines that the LCD 100 is not in a normal state and outputs a high level reset signal to a reset pin (/RES pin) of the LCD 100 at step S23. Upon receiving the high level reset signal, the LCD 100 is reset and, thus, lock-up of the LCD 100 due to the occurrence of ESD is prevented.

In this manner, in the apparatus for preventing lock-up of an LCD in a mobile terminal, the voltage on the VR pin of the LCD is monitored to check whether ESD has been applied to the LCD.

As so far described, the apparatus and method of the present invention for preventing lock-up of an LCD in a mobile terminal have many advantages. For example, since a voltage on a specific pin of an LCD of a mobile terminal is monitored to detect whether ESD has been applied to the LCD, the LCD is reset only when ESD has been applied thereto. Because the LCD is not periodically reset, periodic blinking of the LCD is avoided.

Moreover, it is not necessary to install a plurality of TVS diodes in order to limit a voltage input to each pin of the LCD.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1. A mobile terminal having a liquid crystal display LCD (100) and an electrostatic discharge ESD detecting unit (200) for detecting whether an ESD has been applied, **characterized in that** said ESD detecting unit (200) is adapted for detecting whether an ESD has been applied to the LCD (100) by monitoring a voltage input to a predetermined pin (V_{R}) of the LCD (100); wherein said ESD detecting unit (200) is adapted for generating a reset control signal output which is supplied to a baseband chip set (300), whereas the baseband chip set (300) is adapted for resetting the LCD (100) according to said reset control signal output from the ESD detecting unit (200).

2. The mobile terminal of claim 1, wherein the ESD detecting unit (200) comprises:
an analog-digital converter (210) for converting an analog voltage input to the predetermined pin of the LCD (100) into a digital voltage (Vrd); and
a decision logic (220) for checking whether the digital voltage (Vrd) is within a predetermined range (THmin; THmax) and determining whether an ESD has been applied to the LCD (100) based on said determination.

3. The mobile terminal of claim 2, wherein, when ESD is applied to the LCD (100), the predetermined pin (V_{R}) exhibits a voltage level change that is greater than a voltage level change exhibited by all other individual pins of the LCD (100).

4. The mobile terminal of claim 2, wherein the predetermined range (THmin; THmax) is a voltage level range that a voltage on the predetermined pin (V_{R}) falls within in a normal state in which no ESD has been applied to the LCD (100).

5. A method for preventing lock-up of a liquid crystal display LCD (100) of a mobile terminal comprising a monitoring of a voltage and a generating of a reset signal,
**characterized by**
monitoring the voltage on a predetermined pin (V_{R}) of the LCD (100);
determining if an electrostatic discharge ESD has been applied to the LCD (100) based on whether the monitored voltage falls within a predetermined range (THmin; THmax); and
resetting the LCD (100) if an ESD has been applied to the LCD (100).

6. The method of claim 5, wherein it is determined that an ESD has been applied to the LCD (100) if the monitored voltage falls outside the predetermined range (THmin; THmax).

7. The method of claim 5, wherein the pin (V_{R}) whose voltage is monitored exhibits a voltage level change, in response to an ESD, that is greater than a voltage level change exhibited by all other individual pins of the LCD (100).

8. The method of claim 5, comprising further:
converting (S11) an analog voltage of the predetermined pin (V_{R}) of the LCD (100) into a digital voltage (Vrd);
checking whether an electrostatic discharge ESD has been applied to the LCD (100) based on the digital voltage (Vrd).

9. The method of claim 8, wherein the step of checking whether an ESD has been applied to the LCD (100) comprises:
checking whether the digital voltage (Vrd) is within the predetermined range (THmin; THmax); and
determining that no ESD has been applied to the LCD (100) if the digital voltage (Vrd) is within the predetermined range (THmin; THmax), and
determining that an ESD has been applied to the LCD (100) if the digital voltage (Vrd) is not within the predetermined range (THmin; THmax).

10. The method of claim 9, wherein the predetermined range (THmin; THmax) is a voltage level range that a voltage on the predetermined pin (V_{R}) falls within in a state in which no ESD has been applied to the LCD (100).

## Patentansprüche

1. Mobiles Endgerät, das eine Flüssigkristallanzeige LCD (100) und eine Erfassungseinheit (200) für elektrostatische Entladung ESD, die erfasst, ob eine ESD ausgeübt worden ist, besitzt, **dadurch gekennzeichnet, dass** die ESD-Erfassungseinheit (200) so beschaffen ist, dass sie erfasst, ob eine ESD auf die LCD (100) ausgeübt worden ist, indem sie einen Spannungseingang in einen vorgegebenen Anschlussstift (V_{R}) der LCD (100) überwacht; wobei die ESD-Erfassungseinheit (200) so beschaffen ist, dass sie einen Rücksetzsteuersignalausgang erzeugt, der an einen Grundband-Chipsatz (300) geliefert wird, wobei der Grundband-Chipsatz (300) so beschaffen ist, dass er die LCD (100) entsprechend dem Rücksetzsteuersignalausgang von der ESD-Erfassungseinheit (200) zurücksetzt.

2. Mobiles Endgerät nach Anspruch 1, bei dem die ESD-Erfassungseinheit (200) umfasst:
einen Analog/Digital-Umsetzer (210), der einen analogen Spannungseingang in den vorgegebenen Anschlussstift der LCD (100) in eine digitale Spannung (Vrd) umsetzt; und
eine Entscheidungslogik (220), die prüft, ob die digitale Spannung (Vrd) innerhalb eines vorgegebenen Bereichs (THmin; THmax) liegt, und anhand dieser Bestimmung feststellt, ob auf die LCD (100) eine ESD ausgeübt worden ist.

3. Mobiles Endgerät nach Anspruch 2, bei dem der vorgegebene Anschlussstift (V_{R}) dann, wenn auf die LCD (100) eine ESD ausgeübt worden ist, eine Spannungspegeländerung zeigt, die größer als eine Spannungspegeländerung ist, die irgendeiner der anderen einzelnen Anschlussstifte der LCD (100) zeigt.

4. Mobiles Endgerät nach Anspruch 2, bei dem der vorgegebene Bereich (THmin; THmax) ein Spannungspegelbereich ist, in den eine Spannung an dem vorgegebenen Anschlussstift (V_{R}) in einem normalen Zustand, in dem auf die LCD (100) keine ESD ausgeübt worden ist, fällt.

5. Verfahren zum Verhindern einer Sperre einer Flüssigkristallanzeige LCD (100) eines mobilen Endgeräts, das das Überwachen einer Spannung und das Erzeugen eines Rücksetzsignals umfasst,
**gekennzeichnet durch**
Überwachen der Spannung an einem vorgegebenen Anschlussstift (V_{R}) der LCD (100);
Feststellen, ob eine elektrostatische Entladung ESD auf die LCD (100) ausgeübt worden ist, anhand der Tatsache, ob die vorgegebene Spannung in einen vorgegebenen Bereich (THmin; THmax) fällt; und
Zurücksetzen der LCD (100), falls auf die LCD (100) eine ESD ausgeübt worden ist.

6. Verfahren nach Anspruch 5, bei dem festgestellt wird, dass auf die LCD (100) eine ESD ausgeübt worden ist, falls die überwachte Spannung außerhalb des vorgegebenen Bereichs (THmin; THmax) fällt.

7. Verfahren nach Anspruch 5, bei dem der Anschlussstift (V_{R}), dessen Spannung überwacht wird, in Reaktion auf eine ESD eine Spannungspegeländerung zeigt, die größer als eine Spannungspegeländerung ist, die irgendeiner der anderen einzelnen Anschlussstifte der LCD (100) zeigt.

8. Verfahren nach Anspruch 5, das ferner umfasst:
Umsetzen (S11) einer analogen Spannung des vorgegebenen Anschlussstifts (V_{R}) der LCD (100) in eine digitale Spannung (Vrd); und
Prüfen, ob eine elektrostatische Entladung ESD auf die LCD (100) ausgeübt worden ist, anhand der digitalen Spannung (Vrd).

9. Verfahren nach Anspruch 8, bei dem der Schritt des Prüfens, ob auf die LCD (100) eine ESD ausgeübt worden ist, umfasst:
Prüfen, ob die digitale Spannung (Vrd) innerhalb des vorgegebenen Bereichs (THmin; THmax) liegt; und
Feststellen, dass auf die LCD (100) keine ESD ausgeübt worden ist, falls die digitale Spannung (Vrd) in dem vorgegebenen Bereich (THmin; THmax) liegt, und Feststellen, dass auf die LCD (100) eine ESD ausgeübt worden ist, falls die digitale Spannung (Vrd) nicht in dem vorgegebenen Bereich (THmin; THmax) liegt.

10. Verfahren nach Anspruch 9, bei dem der vorgegebene Bereich (THmin; THmax) ein Spannungspegelbereich ist, in den eine Spannung an dem vorgegebenen Anschlussstift (V_{R}) in einem Zustand, in dem auf die LCD (100) keine ESD ausgeübt worden ist, fällt.

## Revendications

1. Terminal mobile ayant un écran à cristaux liquides LCD (100) et une unité de détection de pointe de tension ESD (200) pour détecter si une ESD a été appliquée, **caractérisé en ce que** ladite unité de détection d'ESD (200) est adaptée pour détecter si une ESD a été appliquée au LCD (100) par surveillance d'une entrée de tension sur une broche prédéterminée (V_{R}) du LCD (100) ; dans lequel ladite unité de détection d'ESD (200) est adaptée pour générer une sortie de signal de commande de réinitialisation qui est transmise à un jeu de puces en bande de base (300), tandis que le jeu de puces en bande de base (300) est adapté pour réinitialiser le LCD (100) en fonction de ladite sortie de signal de commande de réinitialisation provenant de l'unité de détection d'ESD (200).

2. Terminal mobile de la revendication 1, dans lequel l'unité de détection d'ESD (200) comprend : un convertisseur analogique-numérique (210) pour convertir une entrée de tension analogique sur une broche prédéterminée du LCD (100) en une tension numérique (Vrd) ; et une logique de décision (220) pour vérifier si la tension numérique (Vrd) est dans une plage prédéterminée (THmin : THmax) et déterminer si une ESD a été appliquée au LCD (100) sur la base de ladite détermination.

3. Terminal mobile de la revendication 2, dans lequel, lorsqu'une ESD est appliquée au LCD (100), la broche prédéterminée (V_{R}) présente une variation de niveau de tension qui est supérieure à une variation de niveau de tension présentée par toutes les autres broches individuelles du LCD (100).

4. Terminal mobile de la revendication 2, dans lequel la plage prédéterminée (THmin : THmax) est une plage de niveau de tension telle qu'une tension sur la broche prédéterminée (V_{R}) soit située dans un état normal dans lequel aucune ESD n'a été appliquée au LCD (100).

5. Procédé pour éviter le verrouillage d'un écran à cristaux liquides LCD (100) d'un terminal mobile comprenant la surveillance d'une tension et la génération d'un signal de réinitialisation, **caractérisé par** :
- la surveillance de la tension sur une broche prédéterminée (V_{R}) du LCD (100) ;
- la détermination qu'une pointe de tension ESD a été appliquée ou non au LCD (100) sur la base du fait que la tension surveillée est située ou non dans une plage prédéterminée (THmin : THmax) ; et
- la réinitialisation du LCD (100) si une ESD a été appliquée au LCD (100).

6. Procédé de la revendication 5, dans lequel il est déterminé qu'une ESD a été appliquée au LCD (100) si la tension surveillée est située à l'extérieur de la plage prédéterminée (THmin : THmax).

7. Procédé de la revendication 5, dans lequel la broche (V_{R}) dont la tension est surveillée présente une variation de niveau de tension, en réponse à une ESD, qui est supérieure à une variation de niveau de tension présentée par toutes les autres broches individuelles du LCD (100).

8. Procédé de la revendication 5, comprenant en outre :
- la conversion (S11) d'une tension analogique de la broche prédéterminée (V_{R}') du LCD (100) en une tension numérique (Vrd) ;
- la vérification qu'une pointe de tension ESD a été appliquée ou non au LCD (100) sur la base de la tension numérique (Vrd).

9. Procédé de la revendication 8, dans lequel l'étape de vérification qu'une ESD a été appliquée ou non au LCD (100) comprend :
- la vérification que la tension numérique (Vrd) est ou non dans la plage prédéterminée (THmin : THmax) ; et
- la détermination qu'aucune ESD n'a été appliquée au LCD (100) si la tension numérique (Vrd) est dans la plage prédéterminée (THmin : THmax), et la détermination qu'une ESD a été appliquée au LCD (100) si la tension numérique (Vrd) n'est pas dans la plage prédéterminée (THmin : THmax).

10. Procédé de la revendication 9, dans lequel la plage prédéterminée (THmin : THmax) est une plage de niveau de tension telle qu'une tension sur la broche prédéterminée (V_{R}) soit située dans un état dans lequel aucune ESD n'a été appliquée au LCD (100).
